# EUROPEAN PATENT SPECIFICATION

(11) **EP 2 733 001 B1**
(45) Date of publication and mention of the grant of the patent: **08.03.2017**
(21) Application number: 12811948.4
(22) Date of filing: 11.07.2012
(51) Int. Cl.: B60K 6/36, B60K 6/48, B60K 6/547, B60K 20/02, F16H 63/20, F16H 63/32

(54) **MANUAL TRANSMISSION**
HANDSCHALTUNG
TRANSMISSION MANUELLE

(30) Priority: 13.07.2011 JP 2011154817
(43) Date of publication of application: 21.05.2014
(73) Proprietor: Aisin AI Co., Ltd., Nishio-shi, Aichi 445-0006 (JP)
(72) Inventor: MASUI Yuuki, Nishio-shi Aichi 445-0006 (JP); OSUKA Shinya, Nishio-shi Aichi 445-0006 (JP)
(74) Representative: Ettmayr, Andreas
(86) International application number: PCT/JP2012/067731
(87) International publication number: WO 2013/008856

(56) References cited:
- EP-A2- 1 013 494
- EP-A2- 1 762 416
- DE-A1-102007 052 261
- FR-A1- 2 689 821
- JP-A- 2005 054 823
- JP-A- 2010 143 579
- JP-A- 2010 241 352
- JP-A- 2010 241 352

## Description

### TECHNICAL FIELD

The present invention relates to a manual transmission applied to a vehicle which has an internal combustion engine and an electric motor as power sources, and more particularly to a manual transmission applied to a vehicle which includes a friction clutch disposed between the output shaft of the internal combustion engine and the input shaft of the manual transmission.

### BACKGROUND ART

Conventionally, there has been widely known a so-called hybrid vehicle which includes an engine and an electric motor as power sources (see, for example, Japanese Patent Application Laid-Open (kokai) No. 2000-224710). In such a hybrid vehicle, there can be employed a structure in which the output shaft of the electric motor is connected to one of the output shaft of the internal combustion engine, the input shaft of a transmission, and the output shaft of the transmission. In the following description, drive torque from the output shaft of the internal combustion engine will be referred to as "engine drive torque," and drive torque from the output shaft of the electric motor as "motor drive torque."

In recent years, there has been developed a power transmission control apparatus applied to a hybrid vehicle which includes a manual transmission and a friction clutch (hereinafter referred to as an "HV-MT vehicle"). The term "manual transmission" used herein refers to a transmission which does not include a torque converter and whose gear stage is selected in accordance with the shift position of a shift lever operated by a driver (the manual transmission is denoted by MT). Also, the term "friction clutch" used herein refers to a clutch which is interposed between the output shaft of the internal combustion engine and the input shaft of the manual transmission and which is configured such that the engagement state of a friction plate changes in accordance with the operation quantity of a clutch pedal operated by the driver.
DE 10 2007 052 261 A1 discloses a manual transmission according to the preamble part of claim 1. FR 2 689 821 A1 discloses an internal combustion engine driving a primary shaft and an electric motor driving a secondary shaft of a manual gearbox. The secondary shaft drives the front wheels of the vehicle through a reduction gear.

### SUMMARY OF THE INVENTION

A hybrid vehicle can realize a state in which the vehicle travels by utilizing both of engine drive torque and motor drive torque (hereinafter referred to as "HV travel"). In recent years, there has been developed a hybrid vehicle which can realize not only such HV travel but also a state in which the vehicle travels by utilizing only the motor drive torque, while maintaining the internal combustion engine in a stopped state (a state in which the rotation of the output shaft of the internal combustion engine stops) (hereinafter referred to as "EV travel").

In order to enable an HV-MT vehicle to realize EV travel in a state in which a driver does not operate a clutch pedal (namely, in a state in which the clutch of the vehicle is engaged), it is necessary to drive the output shaft of the transmission by utilizing motor drive torque while maintaining a state in which the input shaft of the transmission does not rotate. In order to realize this, it is necessary to connect the output shaft of the electric motor to the output shaft of the transmission and to maintain the transmission in a "state in which no power transmission system is established between the input shaft of the transmission and the output shaft of the transmission."

Here, there is assumed a manual transmission which has an "input shaft to which power is input from an internal combustion engine (through a clutch)" and an "output shaft to which power is input from an electric motor (namely, to which the output shaft of the electric motor is always connected in a power transmissible manner)." In this manual transmission, motor drive torque can be arbitrarily transmitted to the output shaft of the manual transmission (accordingly, to drive wheels) irrespective of whether or not a power transmission system is established between the input shaft and the output shaft.

Accordingly, in order to realize not only HV travel but also the above-mentioned EV travel by utilizing such a manual transmission, the manual transmission must have not only "gear stages in which a power transmission system is established between the input shaft and the output shaft of the transmission" for HV travel (hereinafter referred to as "HV travel gear stages") but also a "gear stage in which no power transmission system is established between the input shaft and the output shaft of the transmission" for EV travel (gear stage different from the neutral) (hereinafter referred to as an "EV travel gear stage").

Namely, in this manual transmission, when the shift lever is moved on a shift pattern to one of HV travel shift completion positions corresponding to a plurality of HV travel gear stages, a power transmission system having a "speed reduction ratio" corresponding to the corresponding HV travel gear stage is established between the input shaft and the output shaft, and when the shift lever is moved on the shift pattern to an EV travel shift completion position (different from the neutral position) corresponding to the EV travel gear stage, no power transmission system is established between the input shaft and the output shaft.

Incidentally, the present applicant has already proposed a manual transmission for an HV-MT vehicle of such a type (see, for example, Japanese Patent Application No. 2011-154447). This application discloses a manual transmission which includes an EV travel gear stage for forward travel (corresponding to 1-st for forward starting) and an EV travel gear stage for reverse travel (corresponding to a gear stage for reverse starting) as EV travel gear stages on the shift pattern. This configuration allows a driver to perform forward starting and reverse starting while utilizing EV travel. As a result, a gear pair for 1-st for forward travel (specifically, a combination of a fixed gear for 1-st and a free-rotating gear for 1-st which are always meshed with each other) and a gear pair for reverse travel (specifically, a combination of a fixed gear for reverse travel, a free-rotating gear for reverse travel, an idle gear, etc.) can be eliminated. Accordingly, the entire transmission can be made compact.

In an ordinary MT vehicle (which is not a hybrid vehicle) including a manual transmission and a friction clutch, the above-mentioned H-type shift pattern is generally determined such that the shift completion position for 1-st (a gear stage for forward starting) is disposed at the forward end of a shift line located at the leftmost position with respect to the left-right direction of the vehicle, and the shift completion position for R (reverse) (a gear stage for reverse starting) is disposed at the rearward end of a shift line located at the rightmost position with respect to the left-right direction of the vehicle.

In contrast, in the configuration disclosed in the above-mentioned application, on a so-called H-type shift pattern having a single selection line and a plurality of shift lines, the shift completion position of an EV travel gear stage for forward travel and the shift completion position of an EV travel gear stage for reverse travel are disposed at the forward end and the rearward end, respectively, of a shift line located on the leftmost position with respect to the left-right direction of the vehicle. Namely, at least the shift completion position of the gear stage for reverse starting differs from that in the above-mentioned ordinary MT vehicle. Accordingly, the configuration disclosed in the above-mentioned application has a problem in that a driver who has become accustomed to the above-mentioned ordinary MT vehicle may feel an unnatural sensation when he or she operates the shift lever.

The present invention has been accomplished in order to solve such a problem, and its object is to provide a manual transmission which has "HV travel gear stages" and "EV travel gear stages" and which does not have a possibility that a driver who has become accustomed to the above-mentioned ordinary MT vehicle feels an unnatural sensation when he or she operates a shift operation member.

A manual transmission for an HV-MT vehicle according to the present invention is provided as defined in claim 1. On the H-type shift pattern, a shift completion position of an "EV travel gear stage" for forward travel (corresponding to 1-st for forward starting) is disposed at the forward end of a shift line located at the leftmost position with respect to the left-right direction of the vehicle, and a shift completion position of an "EV-R travel gear stage" for reverse travel (corresponding to a gear stage for reverse starting) is disposed at the rearward end of a shift line located at the rightmost position with respect to the left-right direction of the vehicle.

By virtue of this, on the shift pattern, at least the shift completion positions of the gear stages for forward starting and reverse starting coincide with those in the above-described ordinary MT vehicle. Accordingly, there is no possibility that a driver who has become accustomed to the above-mentioned ordinary MT vehicle feels an unnatural sensation when he or she operates the shift operation member. Advantageous embodiments of the present invention can be configured according to claim 2 or claim 3.

### BRIEF DESCRIPTION OF THE DRAWINGS

FIG. 1 is a schematic diagram of a power transmission control apparatus for an HV-MT vehicle according to an embodiment of the present invention in a state in which an N position is selected.
FIG. 2 is a schematic view showing the positional relation between an S&S shaft and a plurality of fork shafts in a state in which the N position is selected.
FIG. 3 is a schematic view showing the state of engagement between "sleeves and fork shafts" and the S&S shaft.
FIG. 4 is a diagram showing the detail of a shift pattern.
FIG. 5 is a diagram corresponding to FIG. 1 in a state in which a position for EV is selected.
FIG. 6 is a view corresponding to FIG. 2 in a state in which the position for EV is selected.
FIG. 7 is a diagram corresponding to FIG. 1 in a state in which a position for 2-nd is selected.
FIG. 8 is a view corresponding to FIG. 2 in a state in which the position for 2-nd is selected.
FIG. 9 is a diagram corresponding to FIG. 1 in a state in which a position for 3-rd is selected.
FIG. 10 is a view corresponding to FIG. 2 in a state in which the position for 3-rd is selected.
FIG. 11 is a diagram corresponding to FIG. 1 in a state in which a position for 4-th is selected.
FIG. 12 is a view corresponding to FIG. 2 in a state in which the position for 4-th is selected.
FIG. 13 is a diagram corresponding to FIG. 1 in a state in which a position for 5-th is selected.
FIG. 14 is a view corresponding to FIG. 2 in a state in which the position for 5-th is selected.
FIG. 15 is a diagram corresponding to FIG. 1 in a state in which a position for EV-R is selected.
FIG. 16 is a view corresponding to FIG. 2 in a state in which the position for EV-R is selected.
FIG. 17 is a view corresponding to FIG. 2 in a state in which an oblique shift from 2-nd to 3-rd is performed.
FIG. 18 is a view corresponding to FIG. 2 in a state in which an oblique shift from 3-rd to 2-nd is performed.
FIG. 19 is a view corresponding to FIG. 2 in a state in which an oblique shift from 4-th to 5-th is performed.
FIG. 20 is a view corresponding to FIG. 2 in a state in which an oblique shift from 5-th to 4-th is performed.
FIG. 21 is a view corresponding to FIG. 19 for the case where a selection support arm is provided.
FIG. 22 is a view corresponding to FIG. 16 for the case where a selection support arm is provided.
FIG. 23 is a diagram corresponding to FIG. 4 and showing another example of the shift pattern.
FIG. 24 is a view corresponding to FIG. 2 and showing the positional relation between an S&S shaft and a fork shaft in the example shown in FIG. 23.
FIG. 25 is a diagram corresponding to FIG. 4 and showing another example of the shift pattern.
FIG. 26 is a view corresponding to FIG. 2 and showing the positional relation between an S&S shaft and fork shafts in the example shown in FIG. 25.

### MODE FOR CARRYING OUT THE INVENTION

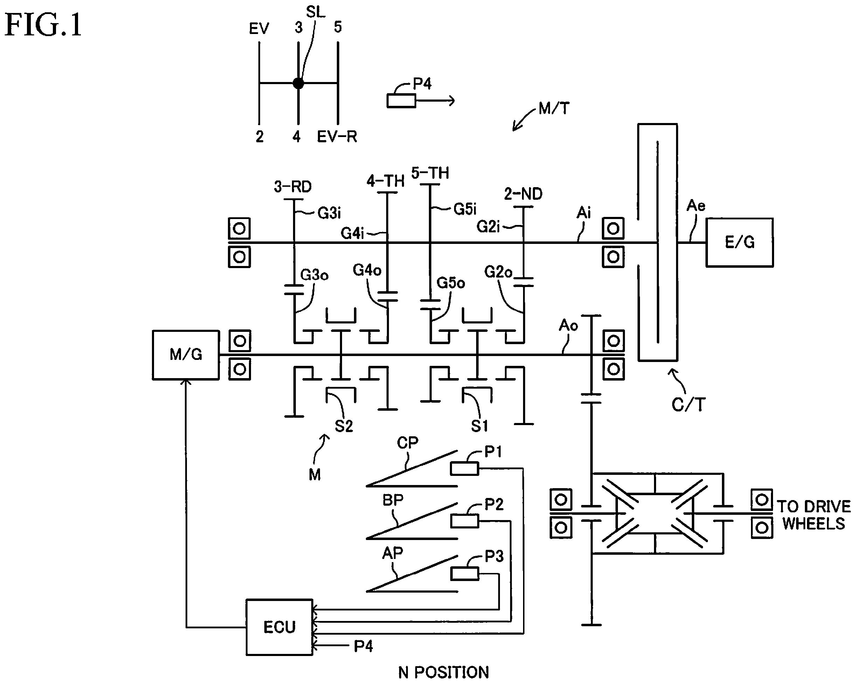

A power transmission control apparatus of a vehicle which includes a manual transmission according to an embodiment of the present invention (hereinafter referred to as the "present apparatus") will now be described with reference to the drawings. As shown in FIG. 1, the present apparatus is applied to a "vehicle which includes an engine E/G and a motor generator M/G as power sources, and also includes a manual transmission M/T, which does not include a torque converter, and a friction clutch C/T"; i.e., the above-described "HV-MT vehicle." This "HV-MT vehicle" may be a front wheel drive vehicle, a rear wheel drive vehicle, or a four wheel drive vehicle.

### (Overall Structure)

First, the overall structure of the present apparatus will be described. The engine E/G is a well known internal combustion engine, such as a gasoline engine which uses gasoline as fuel, or a diesel engine which uses light oil as fuel.

The manual transmission M/T is a transmission which does not include a torque converter and whose gear stage is selected in accordance with the shift position of a shift lever SL operated by a driver. The manual transmission M/T has an input shaft Ai to which power is input from an output shaft Ae of the engine E/G, and an output shaft Ao to which power is input from the motor generator M/G and from which power is output to drive wheels of the vehicle. The input shaft Ai and the output shaft Ao are disposed parallel with each another. The output shaft Ao may be the output shaft of the motor generator M/G itself or a shaft which is parallel to the output shaft of the motor generator M/G and is always connected to the output shaft of the motor generator M/G in a power transmissible manner through a gear train. The details of the structure of the manual transmission M/T will be described later.

The friction clutch C/T is disposed between the output shaft Ae of the engine E/G and the input shaft Ai of the manual transmission M/T. The friction clutch C/T is a well known clutch configured such that the engagement state of a friction plate (more specifically, the axial position of a friction plate, which rotates together with the input shaft Ai, in relation to a fry-wheel, which rotates together with the output shaft Ae) changes in accordance with an operation quantity (depression amount) of a clutch pedal CP operated by the driver.

The engagement state of the friction clutch C/T (the axial position of the friction plate) may be mechanically adjusted in accordance with the operation quantity of the clutch pedal CP, by making use of a link mechanism or the like which mechanically connects the clutch pedal CP to the friction clutch C/T (the friction plate). Alternatively, the engagement state of the friction clutch C/T may be electrically adjusted by making use of drive force of an actuator which operates in accordance with the result of detection by a sensor (a sensor P1 to be described later) which detects the operation quantity of the clutch pedal CP (by a so-called by-wire scheme).

The motor generator M/G has a well known structure (e.g., an AC synchronous motor), and, for example, its rotor (not illustrated) rotates together with the output shaft Ao. Namely, a power transmission system is always established between the output shaft of the motor generator M/G and the output shaft Ao of the manual transmission M/T. In the following description, drive torque from the output shaft Ae of the engine E/G will be referred to as "EG torque," and drive torque from the output shaft of the motor generator M/G (output shaft Ao) as "MG torque."

The present apparatus includes a clutch operation quantity sensor P1 which detects the operation quantity (depression amount, clutch stroke, etc.) of the clutch pedal CP, a brake operation quantity sensor P2 which detects the operation quantity (depression force, presence/absence of operation, etc.) of a brake pedal BP, an accelerator operation quantity sensor P3 which detects the operation quantity (accelerator opening) of an accelerator pedal AP, and a shift position sensor P4 which detects the position of the shift lever SL.

Moreover, the present apparatus includes an electronic control unit (hereinafter simply referred to as the "ECU"). On the basis of information, among others, from the above-mentioned sensors P1 to P4 and other sensors, etc., the ECU controls the EG torque by controlling the fuel injection amount of the engine E/G (opening of its throttle valve) and controls the MG torque by controlling an inverter (not shown).

### (Structure of the manual transmission M/T)

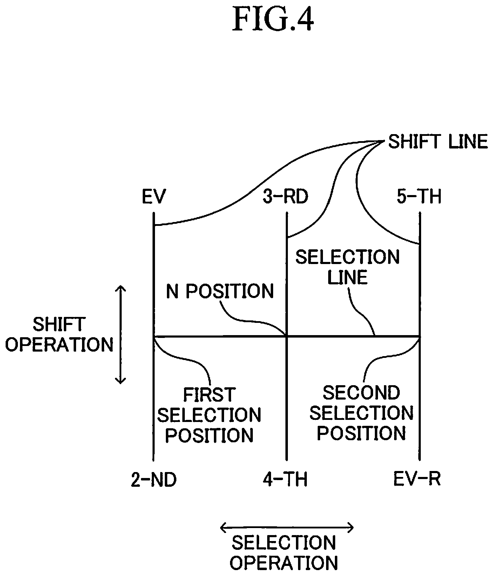

The structure of the manual transmission M/T will be described specifically with reference to FIGS. 1 to 4. As shown in FIGS. 1 and 4, the shift pattern of the shift lever SL employed in the present example is a so-called "H-type" shift pattern which is composed of a single selection line which extends in the left-right direction of the vehicle and three shift lines which respectively extend, in the front-rear direction of the vehicle, from three selection positions (an N position, a first selection position, and a second selection position) located on the selection line. In the following, in order to facilitate description, a range in which the selection operation can be performed and which includes these selection positions will be collectively referred to as a "neutral range."

In the present example, five forward gear stages (EV, 2-nd through 5-th) and a single reverse gear stage (EV-R) are provided as selectable gear stages (shift completion positions). "EV" and "EV-R" are the above-described EV travel gear stages, and "2-nd" through "5-th" are the above-described HV travel gear stages. In particular, the shift completion position for EV is located at the forward end of a shift line which extends from the first selection position in the front-rear direction of the vehicle (i.e., a shift line located at the leftmost position with respect to the left-right direction of the vehicle), and the shift completion position for EV-R is located at the rearward end of a shift line which extends from the second selection position in the front-rear direction of the vehicle (i.e., a shift line located at the rightmost position with respect to the left-right direction of the vehicle).

The manual transmission M/T includes sleeves S1 and S2. The sleeves S1 and S2 are a sleeve for "5-th - 2-nd" and a sleeve for "3-rd - 4-th" which are fitted onto corresponding hubs which rotate together with the output shaft Ao such that the sleeves cannot rotate relative to the corresponding hubs but can move in the axial direction relative to the corresponding hubs.

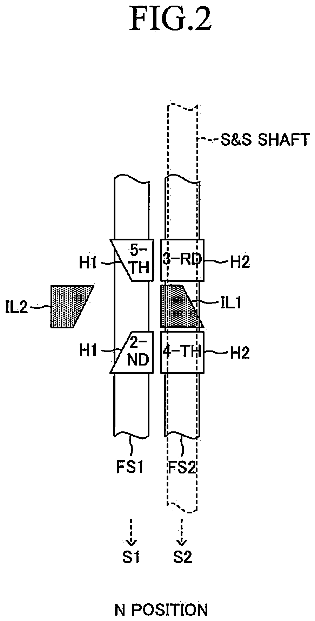

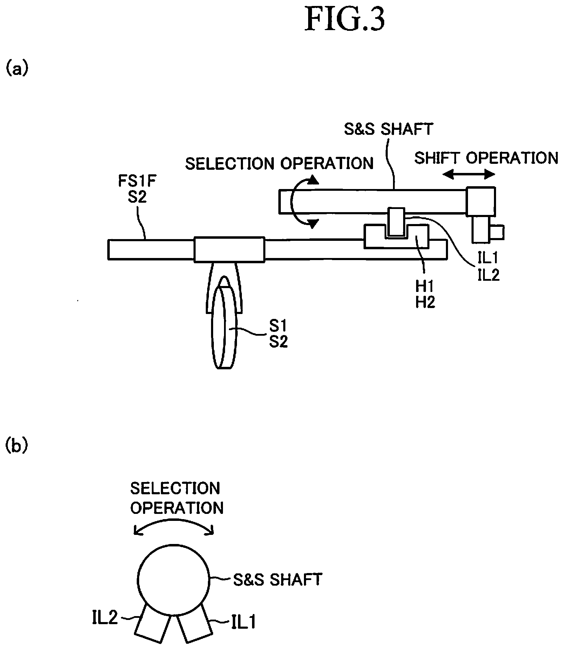

As shown in FIGS. 2 and 3, the sleeves S1 and S2 are integrally coupled with fork shafts FS1 and FS2 (via corresponding forks). The fork shafts FS1 and FS2 (i.e., the sleeves S1 and S2) are driven from their "neutral positions" in the axial direction (in the vertical direction in FIG. 2 and in the left-right direction in FIGS. 1 and 3) by a first inner lever IL1 or a second inner lever IL2 (see FIGS. 2 and 3) fixed to an S&S shaft which moves as a result of operation of the shift lever SL. As a result, a gear stage corresponding to the operation of the shift lever SL is established.

In FIGS. 2 and 3, the S&S shaft is a "selection rotation type." Namely, the S&S shaft is translated in the axial direction as a result of a shift operation (operation in the vertical direction in FIGS. 1 and 4) of the shift lever SL, and is rotated about the axis thereof as a result of a selection operation (operation in the left-right direction in FIGS. 1 and 4) of the shift lever SL. However, the S&S shaft may be a "shift rotation type" S&S shaft which is rotated about the axis as a result of a shift operation of the shift lever SL and is translated in the axial direction as a result of a selection operation of the shift lever SL. Next, the gear stages will be described one by one. Notably, in the following description, the state in which the shift lever SL is located at the shift completion position of a certain gear stage may be expressed by a phrase "that gear stage is selected."

### <N>

As shown in FIGS. 1 and 2, in a state in which the shift lever SL is located at the "N position," the first inner lever IL1 is located between a head portion for 3-rd and a head portion for 4-th of a shift head H2 for "3-rd - 4-th" fixed to the fork shaft FS2. Namely, the first inner lever IL1 is located at a position where it is engageable with the shift head H2 (is not engaged with the shift head H2). Notably, no shift head is engageable with the second inner lever IL2. In this state (more specifically, the state in which the shift lever SL is located within the neutral range), the sleeves S1 and S2 (i.e., the fork shafts FS1 and FS2) are located at their "neutral positions." Accordingly, the sleeves S1 and S2 do not engage with corresponding idle gears. As a result, no power transmission system is established between the input shaft Ai and the output shaft Ao. Also, the MG torque is maintained at "zero." Namely, none of the EG torque and the MG torque is transmitted to the drive wheels.

### <EV>

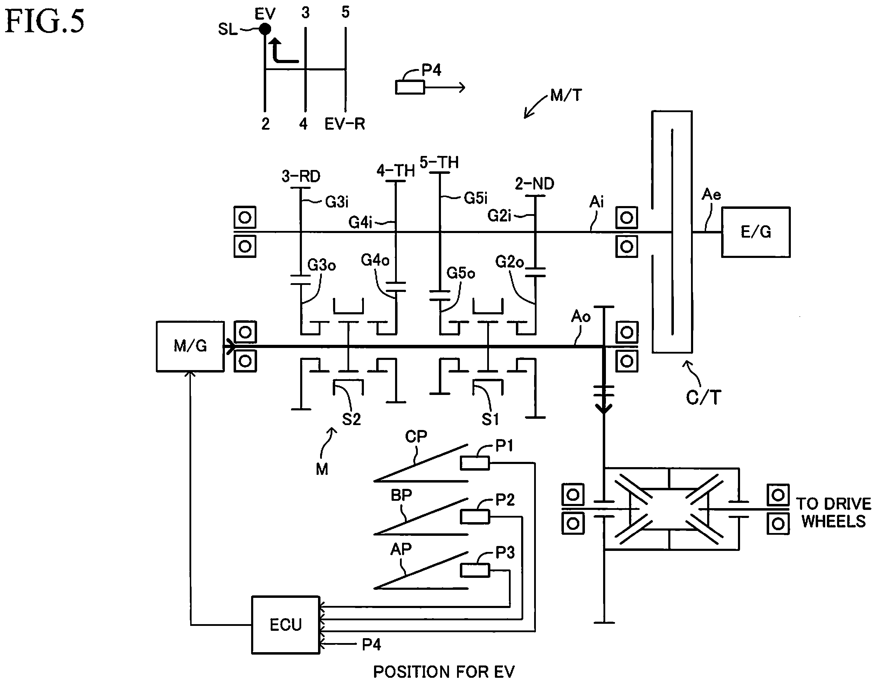

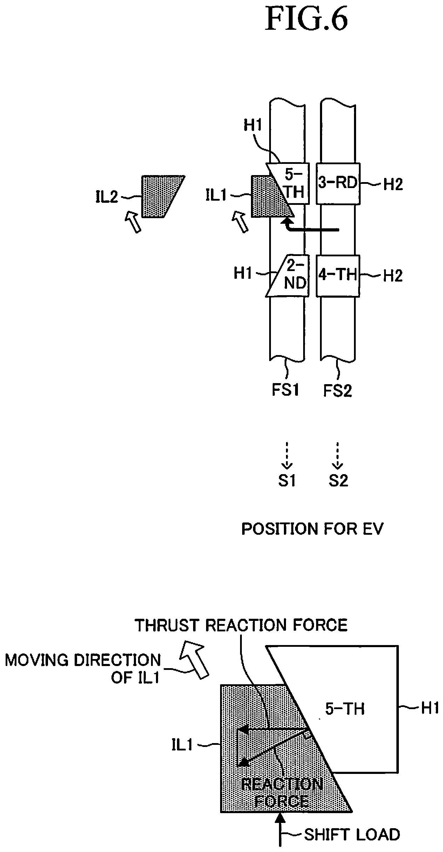

As shown in FIGS. 5 and 6, in the case where the shift lever SL moves from the "N position" to the "first selection position," the first inner lever IL1 moves toward the left side in FIG. 6 and moves to a position between a head portion for 5-th and a head portion for 2-nd of a shift head H1 for "5-th - 2-nd" fixed to the fork shaft FS1. Namely, the first inner lever IL1 moves to a position where it is engageable with the shift head H1. Notably, no shift head is engageable with the second inner lever IL2.

When the shift lever SL moves from the "first selection position" to the "shift completion position for EV" in this state, as shown in FIG. 6, the first inner lever IL1 moves toward the upper side in FIG. 6 and comes into engagement with the head portion for 5-th of the head H1. After that, the first inner lever IL1 tries to push the head portion for 5-th (i.e., the first fork shaft FS1) toward the upper side in FIG. 6 (see "shift load" in FIG. 6).

As shown in FIG. 6, the first inner lever IL1 and the head portion for 5-th engage such that a taper surface which is formed on an engagement portion (side surface) of the first inner lever IL1 and which is inclined in relation to the axial direction of the first fork shaft FS1 comes into surface contact with a taper surface which is formed on an engagement portion (side surface) of the head portion for 5-th and which extends in the same direction as the above-mentioned taper surface. As a result, the first inner lever IL1 receives from the head portion for 5-th a thrust reaction force which acts leftward in FIG. 6. Due to this thrust reaction force, the first inner lever IL1 moves in an upper left direction (oblique direction), rather than moving vertically toward the upper side in FIG. 6, with sliding between the two taper surfaces. As a result, the head portion for 5-th (i.e., the first fork shaft FS1) is maintained at the neutral position without being moved toward the upper side in FIG. 6. In other words, the above-mentioned taper surfaces prevent occurrence of a situation where the gear stage for "5-th" is established when the shift lever SL moves from the "first selection position" to the "shift completion position for EV." Notably, the first fork shaft FS1 may move slightly from the neutral position toward the upper side. In this regard, the term "neutral position" means a "position within a range in which a corresponding sleeve does not come into engagement with a corresponding idle gear" (this applies to the following description).

As described above, even when the shift lever SL moves from the "first selection position" to the "shift completion position for EV," the first fork shaft FS1 (i.e., the sleeve S1) is maintained at the "neutral position." Notably, the second fork shaft FS2 (i.e., the sleeve S2) is also maintained at the "neutral position." Accordingly, as in the case of <N>, no power transmission system is established between the input shaft Ai and the output shaft Ao. Meanwhile, in this case, as indicated by a thick continuous line in FIG. 5, an MG torque for forward travel is transmitted to the drive wheels through the power transmission system between the motor generator M/G and the output shaft Ao.

Namely, when "EV" is selected, there is realized a state (namely, the above-mentioned "EV travel") in which the vehicle travels by utilizing the MG torque only while maintaining the engine E/G in a stopped state (a state in which the rotation of the output shaft Ae of the engine E/G stops). Namely, in this vehicle, the driver can start the vehicle in the forward direction by EV travel by selecting "EV." The MG torque is adjusted to a value for forward travel whose magnitude changes in accordance with the accelerator opening or the like. Notably, distinction of the position of the shift lever SL between the "N position" (neutral range) and the "shift completion position for EV" can be made on the basis of, for example, the result of detection by the shift position sensor P4 and the result of detection by a sensor which detects the position of the S&S shaft.

### <2-nd>

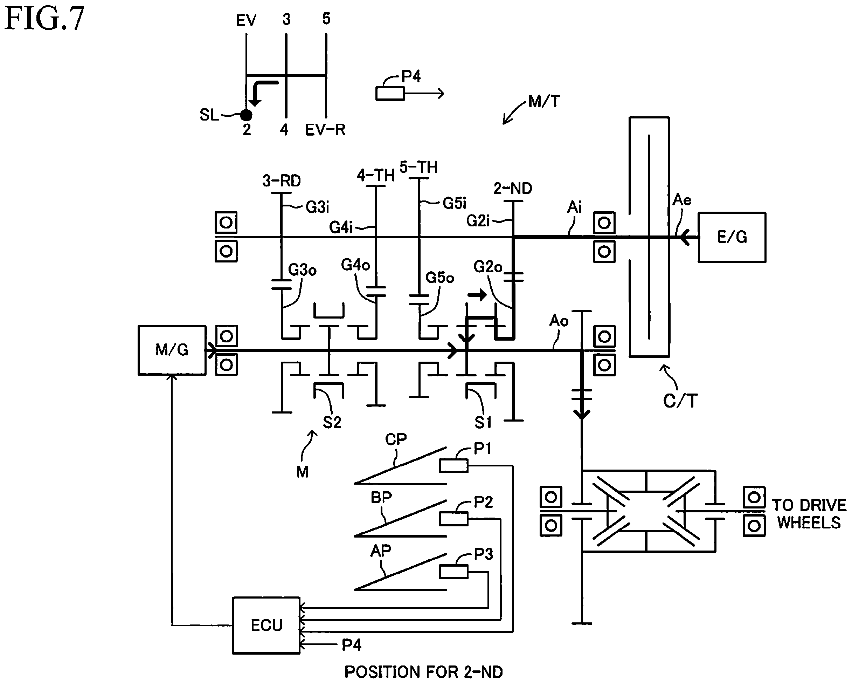

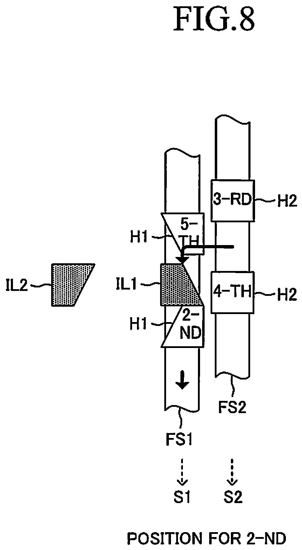

As shown in FIGS. 7 and 8, in the case where the shift lever SL moves from the "N position" to the "first selection position," as described above, the first inner lever IL1 moves to the position where it is engageable with the shift head H1. When the shift lever SL moves from the "first selection position" to the "shift completion position for 2-nd" in this state, as shown in FIG. 8, the first inner lever IL1 moves toward the lower side in FIG. 8 and comes into engagement with the head portion for 2-nd of the head H1. After that, the first inner lever IL1 pushes the head portion for 2-nd (i.e., the first fork shaft FS1) toward the lower side in FIG. 8.

As shown in FIG. 8, the first inner lever IL1 and the head portion for 2-nd engage such that surfaces which are formed on the engagement portion (side surface) of the first inner lever IL1 and the engagement portion (side surface) of the head portion for 2-nd, respectively, and which extend in a direction orthogonal to the axial direction of the first fork shaft FS1 come into surface contact with each other. As a result, the above-mentioned thrust reaction force is not produced. Accordingly, the first fork shaft FS1 (i.e., the sleeve S1) moves toward the lower side in FIG. 8 as the first inner lever IL1 moves vertically toward the lower side in FIG. 8. As a result, the sleeve S1 moves to a "position for 2-nd." Notably, the sleeve S2 is located at the "neutral position."

In this state, the sleeve S1 engages with an idle gear G2o and fixes the idle gear G2o to the output shaft Ao such that the idle gear G2o cannot rotate relative to the output shaft Ao. Also, the idle gear G2o is always meshed with a fixed gear G2i fixed to the input shaft Ai. As a result, as indicated by a thick continuous line in FIG. 7, in addition to the power transmission system between the motor generator M/G and the output shaft Ao, a power transmission system corresponding to "2-nd" is established between the input shaft Ai and the output shaft Ao through the gears G2i and G2o. Namely, in the case where "2-nd" is selected, there is realized a state (namely, the above-mentioned "HV travel") in which the vehicle travels by utilizing both the EG torque transmitted through the clutch C/T and the MG torque.

### <3-rd, 4-th>

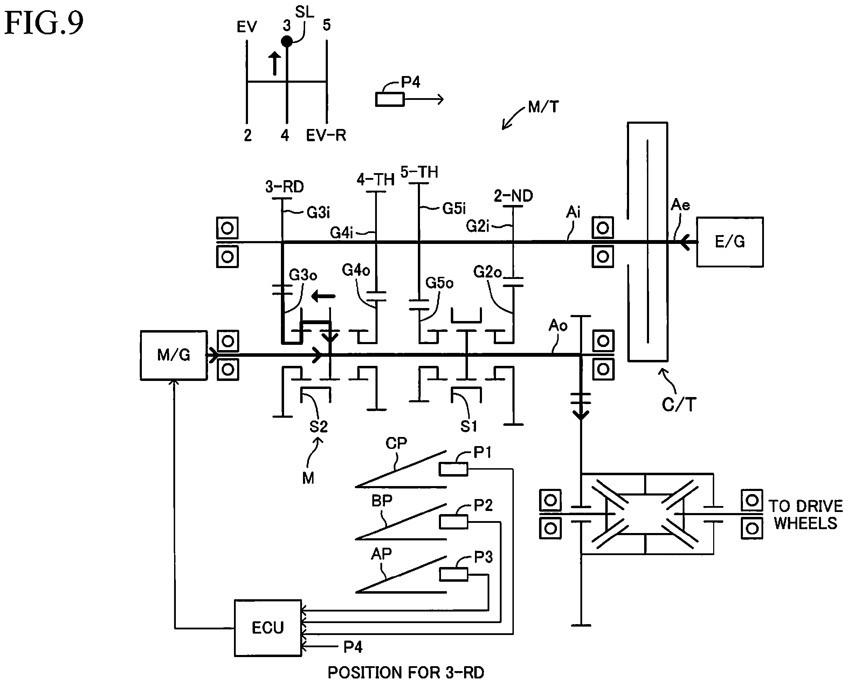

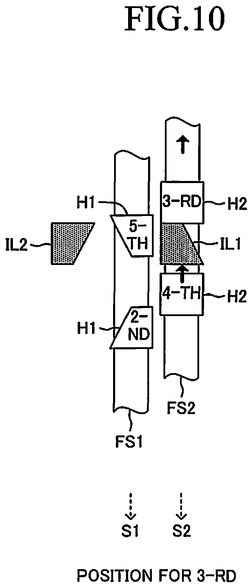

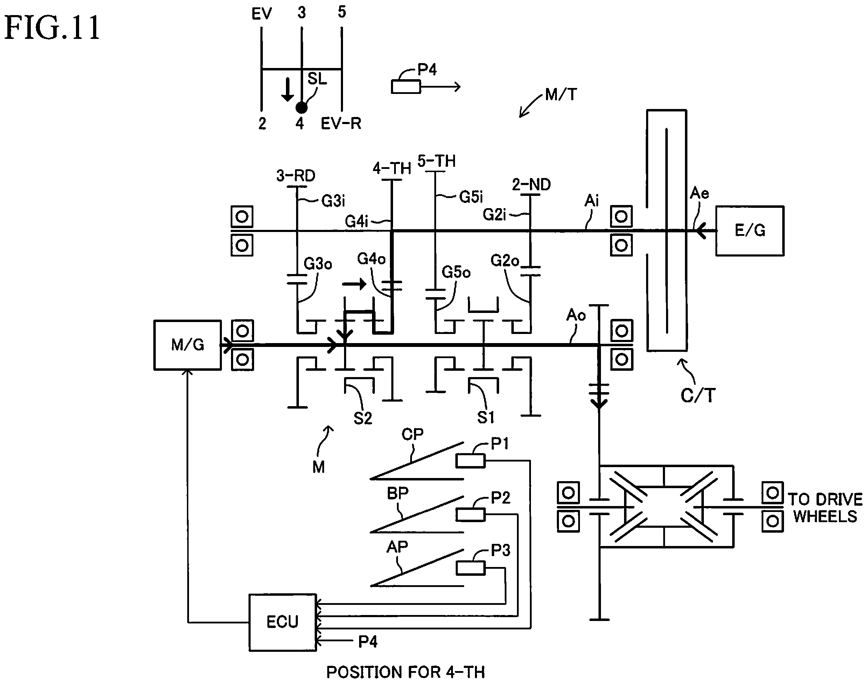

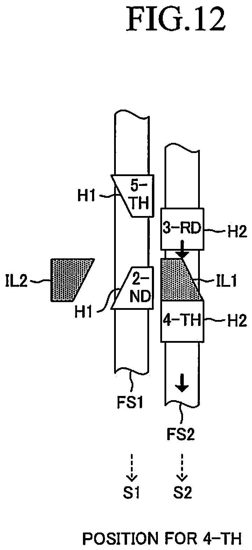

As shown in FIGS. 9 to 12, in the case where the shift lever SL moves from the "N position" to the "shift completion position for 3-rd" or the "shift completion position for 4-rd" as well, as in the case where the shift lever SL moves to the "shift completion position for 2-nd," the above-mentioned "HV travel" is realized as a result of the shift head H2 being pushed and moved by the first inner lever IL1. Namely, when the shift lever SL is moved to the shift completion position for "3-rd" or "4-th", in addition to the power transmission system between the motor generator M/G and the output shaft Ao, a power transmission system corresponding to "3-rd" or "4-th is established between the input shaft Ai and the output shaft Ao through gears G3i and G3o or gears G4i and G4o.

### <5-th>

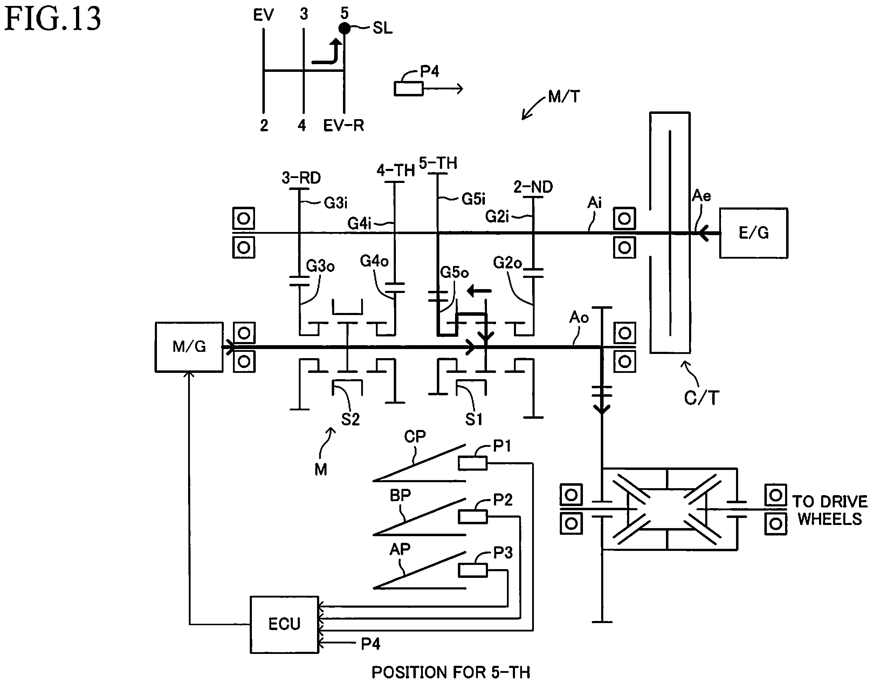

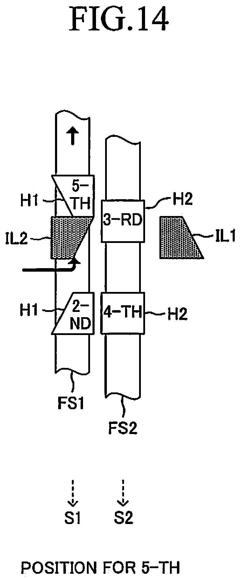

As shown in FIGS. 13 and 14, in the case where the shift lever SL moves from the "N position" to the "second selection position," the second inner lever IL2 moves toward the right side in FIG. 14 and moves to a position between the head portion for 5-th and the head portion for 2-nd of the shift head H1 fixed to the fork shaft FS1. Namely, the second inner lever IL2 moves to a position where it is engageable with the shift head H1. Notably, no shift head is engageable with the first inner lever IL1.

When the shift lever SL moves from the "second selection position" to the "shift completion position for 5-th" in this state, as shown in FIG. 14, the second inner lever IL2 moves toward the upper side in FIG. 14 and comes into engagement with the head portion for 5-th of the head H1. After that, the second inner lever IL2 pushes the head portion for 5-th (i.e., the first fork shaft FS1) toward the upper side in FIG. 14.

As shown in FIG. 14, the second inner lever IL2 and the head portion for 5-th engage such that surfaces which are formed on the engagement portion (side surface) of the second inner lever IL2 and the engagement portion (side surface) of the head portion for 5-th, respectively, and which extend in a direction orthogonal to the axial direction of the first fork shaft FS1 come into surface contact with each other. As a result, the above-mentioned thrust reaction force is not produced. Accordingly, the first fork shaft FS1 (i.e., the sleeve S1) moves toward the upper side in FIG. 14 as the second inner lever IL2 moves vertically toward the upper side in FIG. 14. As a result, the sleeve S1 moves to a "position for 5-th." Notably, the sleeve S2 is located at the "neutral position."

As a result, the above-mentioned "HV travel" is realized. Namely, as indicated by a thick continuous line in FIG. 13, in addition to the power transmission system between the motor generator M/G and the output shaft Ao, a power transmission system corresponding to "5-th" is established between the input shaft Ai and the output shaft Ao through gears G5i and G5o.

### <EV-R>

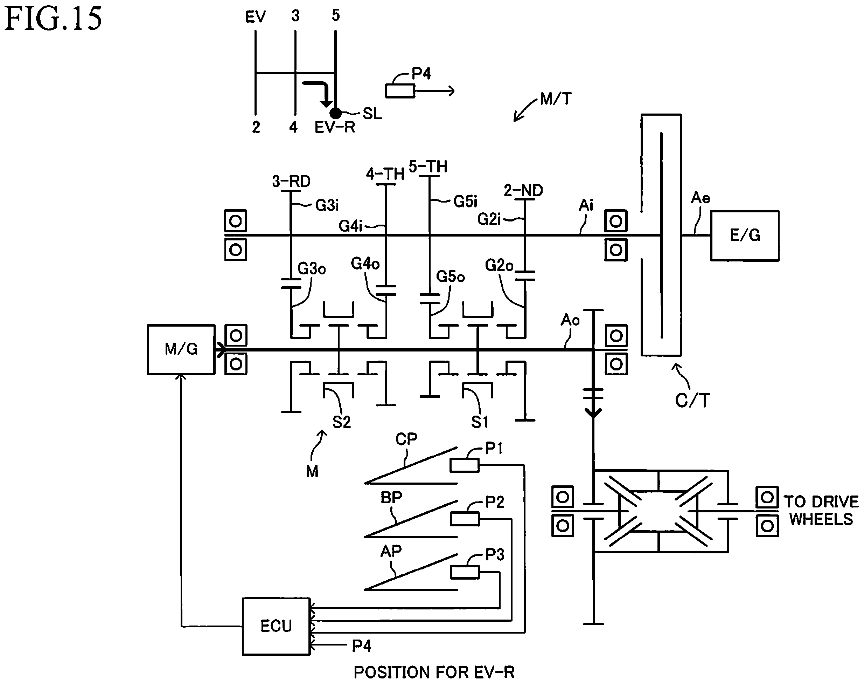

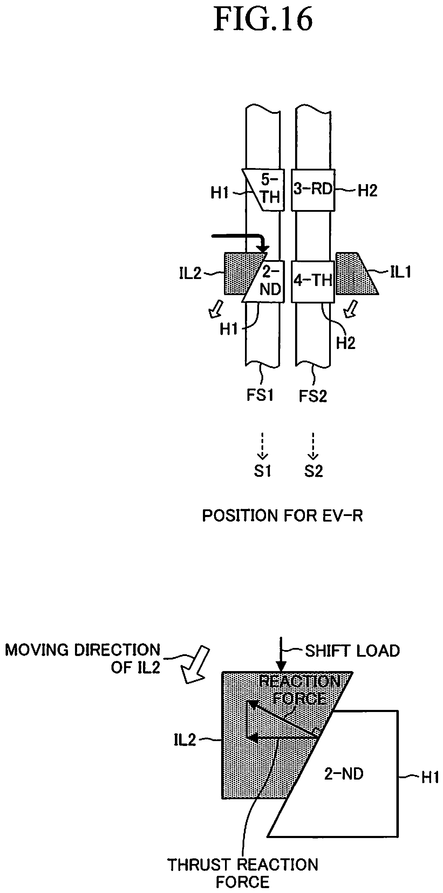

As shown in FIGS. 15 and 16, in the case where the shift lever SL moves from the "N position" to the "second selection position," the second inner lever IL2 moves to a position where it is engageable with the shift head H1, as described above. When the shift lever SL moves from the "second selection position" to the "shift completion position for EV-R" in this state, as shown in FIG. 16, the second inner lever IL2 moves toward the lower side in FIG. 16 and comes into engagement with the head portion for 2-nd of the head H1. After that, the second inner lever IL2 tries to push the head portion for 2-nd (i.e., the first fork shaft FS1) toward the lower side in FIG. 16 (see "shift load" in FIG. 16).

As shown in FIG. 16, the second inner lever IL2 and the head portion for 2-nd engage such that a taper surface which is formed on an engagement portion (side surface) of the second inner lever IL2 and which is inclined in relation to the axial direction of the first fork shaft FS1 comes into surface contact with a taper surface which is formed on an engagement portion (side surface) of the head portion for 2-nd and which extends in the same direction as the above-mentioned taper surface. As a result, the second inner lever IL2 receives from the head portion for 2-nd a thrust reaction force which acts leftward in FIG. 16. Due to this thrust reaction force, the second inner lever IL2 moves in a lower left direction, rather than moving vertically toward the lower side in FIG. 16, with sliding between the two taper surfaces. As a result, the head portion for 2-nd (i.e., the first fork shaft FS1) is maintained at the neutral position without being moved toward the lower side in FIG. 16. In other words, the above-mentioned taper surfaces prevent occurrence of a situation where the gear stage for "2-nd" is established when the shift lever SL moves from the "second selection position" to the "shift completion position for EV-R."

As described above, even when the shift lever SL moves from the "second selection position" to the "shift completion position for EV-R," the first fork shaft FS1 (i.e., the sleeve S1) is maintained at the "neutral position." Notably, the second fork shaft FS2 (i.e., the sleeve S2) is also maintained at the "neutral position." Accordingly, as in the case of <N> and <EV>, no power transmission system is established between the input shaft Ai and the output shaft Ao. Meanwhile, in this case, as indicated by a thick continuous line in FIG. 15, an MG torque for reverse travel is transmitted to the drive wheels through the power transmission system between the motor generator M/G and the output shaft Ao.

Namely, when "EV-R" is selected, "EV travel" is realized. Namely, in this vehicle, the driver can start the vehicle in the reverse direction by EV travel by selecting "EV-R." The MG torque is adjusted to a value for reverse travel whose magnitude changes in accordance with the accelerator opening or the like. Notably, distinction of the position of the shift lever SL between the "N position" (neutral range) and the "shift completion position for EV-R" can be made on the basis of, for example, the result of detection by the shift position sensor P4 and the result of detection by a sensor which detects the position of the S&S shaft.

As described above, in the present example, "EV" and "EV-R" are EV travel gear stages, and "2-nd" through "5-th" are HV travel gear stages. Notably, for the system for transmitting the EG torque, the "ratio of the rotational speed of the input shaft Ai to that of the output shaft Ao" will be referred to as an "MT speed reduction ratio." The MT speed reduction ratio (the number of teeth of GNo/the number of teeth of GNi) (N: 2 to 5) decreases gradually from "2-nd" toward "5-th."

Notably, in the above-described example, the axial positions of the sleeves S1 and S2 are mechanically adjusted in accordance with the shift position of the shift lever SL through utilization of a link mechanism (the S&S shaft and the fork shafts) or the like which mechanically connect the shift lever SL and the sleeves S1 and S2. However, the axial positions of the sleeves S1 and S2 may be electrically adjusted by making use of drive force of an actuator which operates on the basis of the result of detection by the shift position sensor P4 (so-called by-wire scheme)

### (Control of the engine E/G)

The control of the engine E/G by the present apparatus is generally performed as follows. When the vehicle is stopped or "N," "EV," or "EV-R" is selected, the engine E/G is maintained in a stopped state (a state in which fuel injection is not performed). When an HV travel gear stage (any of "2-nd" to "5-th") is selected in a state in which the engine E/G is stopped, the engine E/G is started (fuel injection is started). In periods during which the engine E/G is operating (fuel injection is being performed), the EG torque is controlled on the basis of the accelerator opening, etc. When "N," "EV," or "EV-R" is selected or the vehicle stops in a state the engine E/G is operating, the engine E/G is again maintained in the stopped state.

### (Control of the motor generator M/G)

The control of the motor generator M/G by the present apparatus is generally performed as follows. When the vehicle is stopped or "N" is selected, the motor generator M/G is maintained in a stopped state (the MG torque = 0). When "EV" or "EV-R" is selected, the MG torque is adjusted to a value for EV travel on the basis of the accelerator opening, the clutch stroke, etc. (MG torque control for EV travel). Meanwhile, when an HV travel gear stage (any of "2-nd" through "5-th") is selected, the MG torque is adjusted to a value for HV travel on the basis of the accelerator opening, the clutch stroke, etc. (MG torque control for HV travel). The MG torque control for EV travel and the MG torque control for HV travel differ from each other in terms of the magnitude of the adjusted MG torque. When "N" is selected or the vehicle is stopped, the motor generator M/G is again maintained in a stopped state.

### (Action and effects)

As described above, the manual transmission M/T according to the embodiment of the present invention allows not only forward starting performed through utilization of EV travel but also reverse starting performed through utilization of EV travel. As a result, not only the gear pair for 1-st for forward travel (specifically, a combination of a fixed gear for 1-st and an idle gear for 1-st which are always meshed with each other), but also the gear pair for reverse travel (specifically, a combination of a fixed gear for reverse travel, a free-rotating gear for reverse travel, an idle gear, etc.) is eliminated (see FIG. 1, etc.). Accordingly, as compared with a transmission which includes both of the gear pair for 1-st for forward travel and the gear pair for reverse travel, the entire transmission can be made more compact.

Also, in the above-described embodiment, on the H-type shift pattern, the "shift completion position for EV" used for forward starting is disposed at the forward end of the shift line located at the leftmost position with respect to the left-right direction of the vehicle, and the "shift completion position for EV-R" used for reverse starting is disposed at the rearward end of the shift line located at the rightmost position with respect to the left-right direction of the vehicle. Accordingly, at least the shift completion position of the gear stage for forward starting and the shift completion position of the gear stage for reverse starting coincide with those in an ordinary MT vehicle (which is not a hybrid vehicle) including a manual transmission and a friction clutch. Accordingly, there is no possibility that a driver who has become accustomed to the above-mentioned ordinary MT vehicle feels an unnatural sensation when he or she operates the shift lever SL.

In general, a manual transmission requires fork shafts whose number is equal to the number of shift lines present on an H-type shift pattern. In contrast, according to the above-described configuration, the manual transmission of the present embodiment requires only two fork shafts despite the fact that an H-type shift pattern including three shift lines is employed (see FIG. 2, etc.). Namely, the number of necessary fork shafts can be reduced by one, whereby the entire transmission can be made more compact.

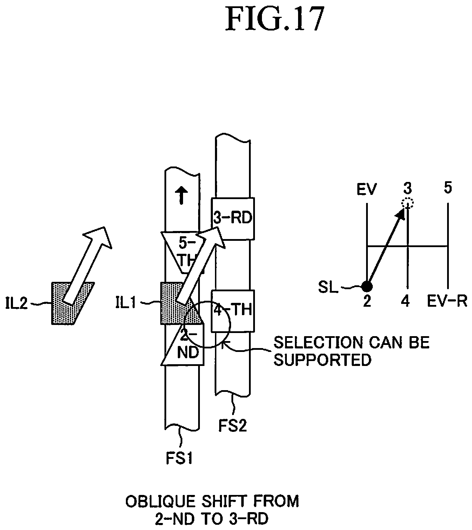

Next, the case where so-called "oblique shift" is performed in the above-described embodiment will be additionally described with reference to FIGS. 17 to 20. The term "oblique shift" refers to a shift operation which is started and performed in a state in which the shift lever SL is being pushed in the selection direction (the left-right direction of the vehicle).

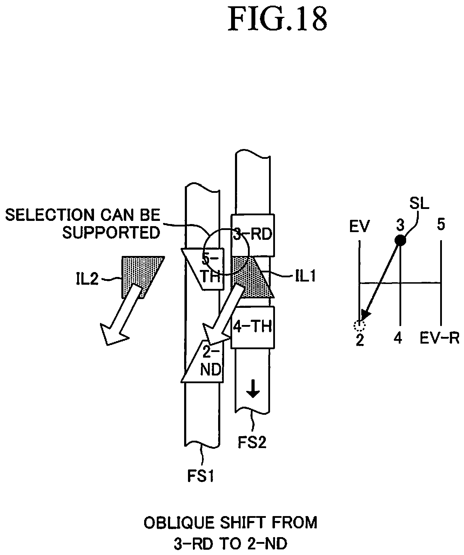

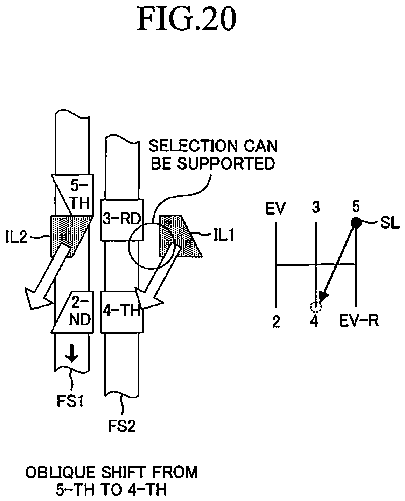

As can be understood from FIGS. 17, 18, and 20, in the case of the "oblique shift" from 2-nd to 3-rd, that from 3-rd to 2-nd, and that from 5-th to 4-th, at the beginning of the oblique shift, the inner lever IL1 comes into contact with a member which is located adjacent to the inner lever IL1 in the selection direction. Specifically, in the case of the "oblique shift" from 2-nd to 3-rd, the inner lever IL1 comes into contact with the left side surface of the head portion for 4-th (see FIG. 17); in the case of the "oblique shift" from 3-rd to 2-nd, the inner lever IL1 comes into contact with the right side surface of the head portion for 5-th (see FIG. 18); and in the case of the "oblique shift" from t from 5-th to 4-th, the inner lever IL1 comes into contact with the right side surface of the head portion for 3-rd (see FIG. 20).

In other words, there exists a member which supports the shift lever SL in the selection direction at the beginning of the "oblique shift." Notably, although a description which uses drawings is omitted, in the case of the "oblique shift" from EV to 4-th, that from 4-th to EV, that from 3-rd to EV-R, and that from EV-R to 3-rd as well, like the above-described case, there exists a member which supports the shift lever SL in the selection direction at the beginning of the "oblique shift." As a result, it is possible to prevent occurrence of a situation in which the shift lever SL moves greatly in the selection direction at the beginning of the "oblique shift."

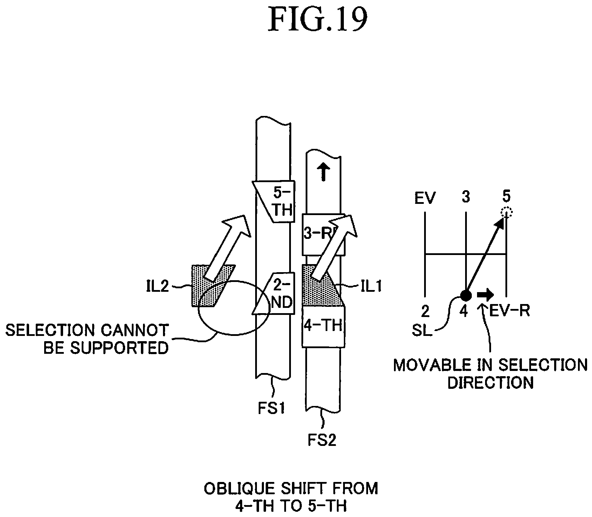

In contrast, as shown in FIG. 19, in the case of "oblique shift" from 4-th to 5-th, there does not exist a member which is located adjacent to the inner lever IL1 or IL2 in the selection direction at the beginning of the "oblique shift." In other words, there does not exist a member which supports the shift lever SL in the selection direction at the beginning of the "oblique shift." As a result, there is a possibility that the shift lever SL greatly moves in the selection direction (in the rightward direction in FIG. 19) at the beginning of the "oblique shift."

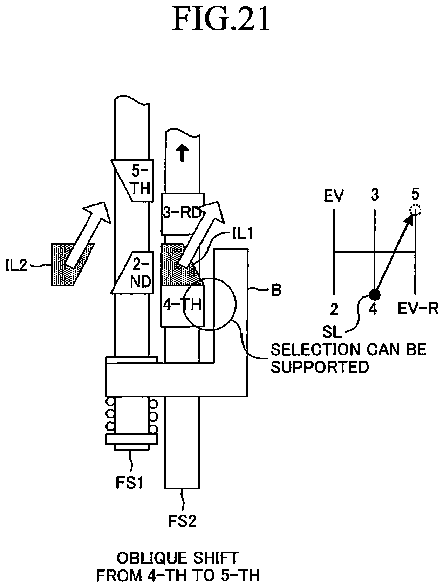

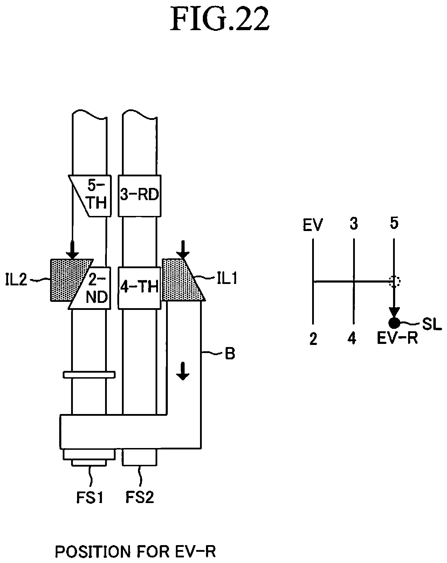

This problem can be solved by providing an arm B which restricts movement of the inner lever in the selection direction as shown in FIGS. 21 and 22. This arm B is provided on the fork shaft FS1 such that it can move in the axial direction. As shown in FIG. 21, by means of spring load, the arm B is usually located at the uppermost position within a range within which the arm B is movable relative to the fork shaft FS1. In this state, a distal end portion of the arm B is located at a position which is adjacent to the inner lever IL1 in the selection direction in a state in which the gear stage for "4-th" is selected (namely, at the beginning of the "oblique shift" from 4-th to 5-th).

Accordingly, at the beginning of the "oblique shift" from 4-th to 5-th, the inner lever IL1 comes into engagement with the left side surface of the arm B. As a result, it is possible to prevent occurrence of a situation where the shift lever SL greatly moves in the selection direction at the beginning of the "oblique shift" from 4-th to 5-th (FIG. 19).

Also, as shown in FIG. 22, when the shift lever SL moves from the "second selection position" to the "shift completion position for EV-R," the inner lever IL1 comes into engagement with the distal end portion of the arm B, and the inner lever IL1 pushes the arm B toward the lower side in FIG. 22. At that time, against the spring load, the arm B moves downward in the drawing in relation to the fork shaft FS1. Therefore, the arm B can move downward in the drawing, while maintaining the fork shaft FS1 at the neutral position. Accordingly, it is possible to prevent occurrence of a situation where the gear stage for "2-nd" is established when the shift lever SL moves from the "second selection position" to the "shift completion position for EV-R."

The present invention is not limited to the above-described embodiment, and various modifications may be employed without departing from the scope of the present invention. For example, in the above-described embodiment, the first and second inner levers IL1 and IL2 are fixed to the S&S shaft. Accordingly, when the shift lever SL is operated from the "first selection position" toward the "shift completion position for EV," in actuality, the shift lever SL also moves in an upper left direction, rather than moving vertically toward the upper side, from the "first selection position" in FIG. 4 as a result of movement of the inner lever IL1 in an upper left direction in FIG. 6. Similarly, when the shift lever SL is operated from the "second selection position" toward the "shift completion position for EV-R," in actuality, the shift lever SL also moves in a lower left direction, rather than moving vertically toward the lower side, from the "second selection position" in FIG. 4 as a result of movement of the inner lever IL2 in a lower left direction in FIG. 16.

In order to cope with this problem, the first and second inner levers IL1 and IL2 are preferably disposed on the S&S shaft such that they can move from a reference portion within a predetermined range determined to absorb a positional shift of the shift lever SL in the advancing direction (in the direction corresponding to the selection operation). Since this structure can be realized by using one of known structures which use spring load, etc., its detailed description will be omitted here.

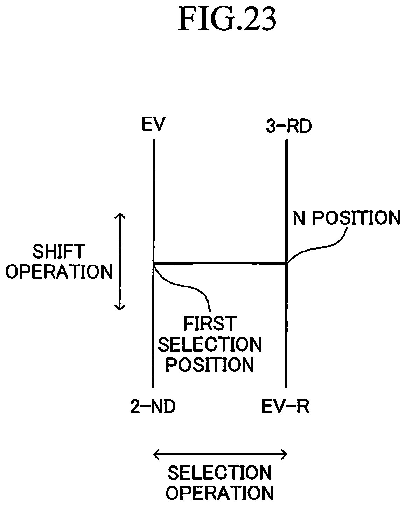

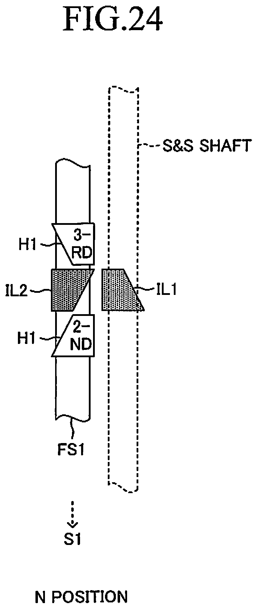

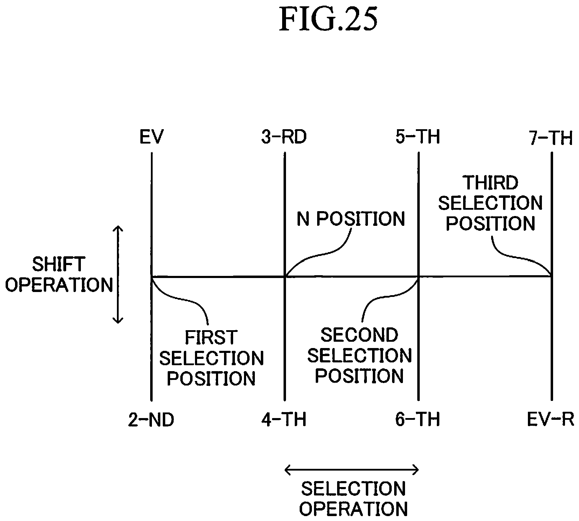

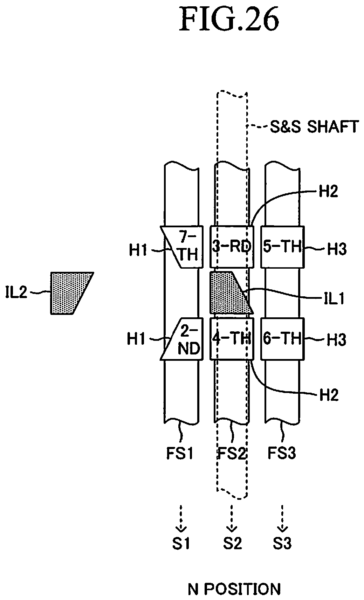

In the above-described embodiment, the transmission includes two fork shafts for an H-type shift pattern having three shift lines (see FIG. 2, FIG. 4, etc.). However, as shown in FIGS. 23 and 24, the transmission may be configured to include a single fork shaft for an H-type shift pattern having two shift lines. Alternatively, as shown in FIGS. 25 and 26, the transmission may be configured to include three fork shafts for an H-type shift pattern having four shift lines. In any of the above-described cases, the transmission includes a fork shaft(s) whose number is smaller by one than the number of the shift lines of the H-type shift pattern. Therefore, the entire transmission can be mode more compact.

Also, the transmission may be configured to include three fork shafts for the H-type shift pattern shown in FIG. 4 and having three shift lines. In this case, a single inner lever is provided on the S&S shaft; a head for 2-nd is provided on a fork shaft corresponding to a shift line extending from the first selection position; a head for 3-rd and a head for 4-th are provided on a fork shaft corresponding to a shift line extending from the N position; and a head for 5-th is provided on a fork shaft corresponding to a shift line extending from the second selection position. When the shift lever SL moves from the first selection position to the shift completion position for EV and when the shift lever SL moves from the second selection position to the shift completion position for EV-R, no head comes into engagement with the inner lever.

In the above-described embodiment, both of the sleeves S1 and S2 are provided on the input shaft Ai. However, both of the sleeves S1 and S2 may be provided on the output shaft Ao. Alternatively, one of the sleeves S1 and S2 may be provided on the output shaft Ao, and the other sleeve may be provided on the input shaft Ai. Also, the order of arrangement of the plurality of gear pairs disposed on the input shaft Ai and the output shaft Ao may differ from that employed in the above-described embodiment.

## Claims

1. A manual transmission (M/T) having no torque converter, which is applied to a vehicle including an internal combustion engine (E/G) and an electric motor (M/G) as power sources, comprising:
an input shaft (Ai) to which power is input from the internal combustion engine;
an output shaft (Ao) to which power is input from the electric motor and from which power is output to a drive wheel of the vehicle; and
a transmission speed change mechanism (M) configured such that, when a shift operation member (SL) operated by a driver moves, on a shift pattern, to each of hybrid travel shift completion positions corresponding to a plurality of hybrid travel gear stages (2-nd to 5-th) for traveling in a state in which drive forces of both of the internal combustion engine and the electric motor can be used, the transmission speed change mechanism establishes a power transmission between the input shaft and the output shaft such that a transmission speed reduction ratio, which is the ratio of rotational speed of the input shaft to that of the output shaft, is set to a value corresponding to a corresponding hybrid travel gear stage, and when the shift operation member moves, on the shift pattern, to each of motor travel shift completion positions corresponding to a plurality of motor travel gear stages (EV, EV-R) for traveling by using the drive force of the electric motor only, the transmission speed change mechanism establishes no power transmission between the input shaft and the output shaft,
wherein the transmission speed change mechanism includes, as the plurality of motor travel gear stages, one motor travel gear stage for forward travel and one motor travel gear stage for reverse travel,
wherein the shift pattern includes:
a single selection line extending in a left-right direction of the vehicle which is a path along which the shift operation member moves in the left-right direction of the vehicle as a result of a selection operation, which is an operation of the shift operation member in the left-right direction of the vehicle, in a neutral state in which no power transmission is established between the input shaft and the output shaft; and
a plurality of shift lines each of which is a path along which the shift operation member moves in a front-rear direction of the vehicle as a result of a shift operation, which is an operation of the shift operation member in the front-rear direction of the vehicle, from a corresponding one of a plurality of selection positions on the selection line, each shift line extending from the corresponding selection position toward one side or both sides with respect to the front-rear direction of the vehicle, and a corresponding shift completion position being disposed at each end of each shift line, and
wherein the selection position corresponding to the motor travel gear stage for forward travel (EV) is a first selection position which is located at the leftmost side of the vehicle among the plurality of selection positions, and the shift completion position of the motor travel gear stage for forward travel is disposed at a forward end of a first shift line, of the plurality of shift lines, which extends from the first selection position in the front-rear direction of the vehicle;
the selection position corresponding to the motor travel gear stage for reverse travel (EV-R) is a second selection position which is located at the rightmost side of the vehicle among the plurality of selection positions, and the shift completion position of the motor travel gear stage for reverse travel is disposed at a rearward end of a second shift line, of the plurality of shift lines, which extends from the second selection position in the front-rear direction of the vehicle; and
the selection position corresponding to a second gear stage (5-th) among the plurality of hybrid travel gear stages (2-nd to 5-th) is the second selection position, and the shift completion position of the second gear stage is disposed at a forward end of the second shift line,
**characterized in that**
the selection position corresponding to a first gear stage (2-nd) among the plurality of hybrid travel gear stages (2-nd to 5-th) is the first selection position, and the shift completion position of the first gear stage is disposed at a rearward end of the first shift line;
wherein the transmission speed change mechanism includes:
a plurality of fixed gears (G2i, G3i, G4i, G5i) which are non-rotatably provided on the input shaft (Ai) or the output shaft (Ao) and which correspond to the plurality of hybrid travel gear stages;
a plurality of idle gears (G2o, G3o, G4o, G5o) which are rotatably provided on the input shaft or the output shaft, which correspond to the plurality of hybrid travel gear stages, and which are always meshed with the fixed gears of the corresponding hybrid travel gear stages;
a plurality of sleeves (S1, S2) which are non-rotatably and axially movably provided on the corresponding shaft of the input and output shafts and each of which can be engaged with the corresponding idle gear of the plurality of idle gears so as to fix the corresponding idle gear to the corresponding shaft such that the corresponding idle gear cannot rotate relative to the corresponding shaft;
a plurality of fork shafts (FS1, FS2) each of which is connected to a corresponding one of the plurality of sleeves and can move in an axial direction thereof; and
a shift and selection shaft which is moved in an axial direction thereof or is rotated about its axis as a result of the selection operation of the shift operation member, and is rotated about its axis or is moved in the axial direction as a result of the shift operation of the shift operation member, the shift and selection shaft having first and second inner levers (IL1, IL2) which project from a side surface of the shift and selection shaft, wherein
as a result of the selection operation of the shift operation member, a corresponding inner lever of the first and second inner levers (IL1, IL2) moves to a position where the inner lever is engageable with a corresponding shift head (H1, H2) formed on a side surface of a corresponding fork shaft among the plurality of fork shafts, and as a result of the shift operation of the shift operation member, the corresponding inner lever moves and comes into engagement with the corresponding shift head (H1, H2), whereby the corresponding fork shaft axially moves from the neutral position to thereby establish a corresponding gear stage;
when the shift operation member is located at the first selection position as a result of the selection operation, the first inner lever (IL1) moves to a position where it is engageable with the shift head of the first fork shaft (FS1) among the plurality of fork shafts; and
when the shift operation member is located at the second selection position as a result of the selection operation, the second inner lever (IL2) moves to a position where it is engageable with the shift head of the first fork shaft (FS1),
wherein the transmission speed change mechanism is configured
such that, at the time of the shift operation of the shift operation member from the first selection position to the shift completion position of the first gear stage (2-nd), as a result of movement of the first inner lever (IL1) in a first axial direction, the first inner lever and the shift head of the first fork shaft come into engagement, whereby the first fork shaft moves from its neutral position in the first axial direction to thereby establish the first gear stage, and, at the time of the shift operation of the shift operation member from the first selection position to the shift completion position of the motor travel gear stage for forward travel (EV), the first fork shaft is maintained at the neutral position even when the first inner lever (IL1) moves in the second axial direction opposite the first axial direction, and
such that, at the time of the shift operation of the shift operation member from the second selection position to the shift completion position of the second gear stage (5-th), as a result of movement of the second inner lever (IL2) in the second axial direction, the second inner lever and the shift head of the first fork shaft come into engagement, whereby the first fork shaft moves from its neutral position in the second axial direction to thereby establish the second gear stage, and, at the time of the shift operation of the shift operation member from the second selection position to the shift completion position of the motor travel gear stage for reverse travel (EV-R), the first fork shaft is maintained at the neutral position even when the second inner lever (IL2) moves in the first axial direction.

2. A manual transmission according to claim 1, wherein the transmission speed change mechanism is configured
such that, at the time of the shift operation of the shift operation member from the first selection position to the shift completion position of the motor travel gear stage for forward travel (EV), a surface contract is established between taper surfaces which are formed on an engagement portion of the first inner lever and an engagement portion of the shift head of the first fork shaft, which are inclined from the second axial direction, and which extend in the same direction, and
such that, at the time of the shift operation of the shift operation member from the second selection position to the shift completion position of the motor travel gear stage for reverse travel (EV-R), a surface contract is established between taper surfaces which are formed on an engagement portion of the second inner lever and an engagement portion of the shift head of the first fork shaft, which are inclined from the first axial direction, and which extend in the same direction.

3. A manual transmission according to claim 2, wherein the transmission speed change mechanism comprises:
a restriction member (B) which restrict movement of the first inner lever or the second inner lever in a direction perpendicular to the first and second axial directions in a state in which the shift operation member is located at the shift completion position.

## Patentansprüche

1. Handschaltgetriebe (M/T), das keinen Drehmomentwandler aufweist, das auf ein Fahrzeug angewendet wird, das einen Verbrennungsmotor (E/G) und einen Elektromotor (M/G) als Leistungsquellen hat, aufweisend:
eine Eingangswelle (Ai), in die Leistung von dem Verbrennungsmotor eingespeist wird;
eine Ausgangswelle (Ao), in die Leistung vom Elektromotor eingespeist wird und von der Leistung an ein Antriebsrad des Fahrzeugs abgegeben wird; und
einen Getriebegangschaltungsmechanismus (M), der so konfiguriert ist, dass bei einer Bewegung eines von einem Fahrer betätigten Schaltbetätigungselements (SL) auf einem Schaltschema jeweils zu Hybridfahrtschaltabschlusspositionen, die mehreren Hybridfahrtgangstufen (2. bis 5.) entsprechen, um in einem Zustand zu fahren, in dem Antriebskräfte sowohl des Verbrennungsmotors als auch des Elektromotors verwendet werden können, der Getriebegangschaltungsmechanismus eine Leistungsübertragung zwischen der Eingangswelle und der Ausgangswelle herstellt, sodass ein Getriebeuntersetzungsverhältnis, welches das Verhältnis einer Drehzahl der Eingangswelle zu derjenigen der Ausgangswelle ist, auf einen Wert eingestellt wird, der einer entsprechenden Hybridfahrtgangstufe entspricht, und bei einer Bewegung des Schaltbetätigungselements auf dem Schaltschema jeweils zu Elektromotorfahrtschaltabschlusspositionen die mehreren Elektromotorfahrtgangstufen (EV, EV-R) zum Fahren unter ausschließlicher Verwendung der Antriebskraft des Elektromotors entsprechen, der Getriebegangschaltungsmechanismus keine Leistungsübertragung zwischen der Eingangswelle und der Ausgangswelle herstellt,
wobei der Getriebegangschaltungsmechanismus als die mehreren Elektromotorfahrtgangstufen eine Elektromotorfahrtgangstufe für Vorwärtsfahrt und eine Elektromotorfahrtgangstufe für Rückwärtsfahrt aufweist;
wobei das Schaltschema aufweist:
eine einzige Auswahllinie, die sich in einer Links-Rechts-Richtung des Fahrzeugs erstreckt, die ein Pfad ist, entlang dem sich das Schaltbetätigungselement als ein Ergebnis einer Auswahlbetätigung, die eine Betätigung des Schaltbetätigungselements in der Links-Rechts-Richtung des Fahrzeugs ist, in der Links-Rechts-Richtung des Fahrzeugs in einem neutralen Zustand bewegt, in dem keine Leistungsübertragung zwischen der Eingangswelle und der Ausgangswelle hergestellt ist; und
mehrere Schaltlinien, von denen jede ein Pfad ist, entlang dem sich das Schaltbetätigungselement als ein Ergebnis einer Schaltbetätigung, die eine Betätigung des Schaltbetätigungselements in der Vor-Rück-Richtung des Fahrzeugs ist, von einer Entsprechenden der mehreren Auswahlpositionen auf der Auswahllinie aus in einer Vor-Rück-Richtung des Fahrzeugs bewegt, wobei sich jede Schaltlinie von der entsprechenden Auswahlposition aus zu einer Seite oder zu beiden Seiten bezüglich der Vor-Rück-Richtung der Fahrzeugs erstreckt und eine entsprechende Schaltabschlussposition jeweils am Ende der Schaltlinie angeordnet ist; und
wobei die Auswahlposition, die der Elektromotorfahrtgangstufe für Vorwärtsfahrt (EV) entspricht, eine erste Auswahlposition ist, die auf der Seite am weitesten links des Fahrzeugs unter den mehreren Auswahlpositionen angeordnet ist, und die Schaltabschlussposition der Elektromotorfahrtgangstufe für Vorwärtsfahrt an einem vorderen Ende einer ersten Schaltlinie der mehreren Schaltlinien angeordnet ist, die sich von der ersten Auswahlposition aus in der Vor-Rück-Richtung des Fahrzeugs erstreckt;
die Auswahlposition, die der Elektromotorfahrtgangstufe für Rückwärtsfahrt (EV-R) entspricht, eine zweite Auswahlposition ist, die auf der Seite am weitesten rechts des Fahrzeugs unter den mehreren Auswahlpositionen angeordnet ist, und die Schaltabschlussposition der Elektromotorfahrtgangstufe für Rückwärtsfahrt am hinteren Ende einer zweiten Schaltlinie angeordnet ist, die sich von der zweiten Auswahlposition aus in der Vor-Rück-Richtung des Fahrzeugs erstreckt; und
die Auswahlposition, die einer zweiten Gangstufe (5.) unter den mehreren Hybridfahrtgangstufen (2. bis 5) entspricht, die zweite Auswahlposition ist, und die Schaltabschlussposition der zweiten Gangstufe an einem vorderen Ende der zweiten Schaltlinie angeordnet ist,
**dadurch gekennzeichnet, dass**
die Auswahlposition, die einer ersten Gangstufe (2.) unter den mehreren Hybridfahrtgangstufen (2. bis 5.) entspricht, die erste Auswahlposition ist, und die Schaltabschlussposition der ersten Gangstufe an einem hinteren Ende der ersten Schaltlinie angeordnet ist;
wobei der Getriebegangschaltungsmechanismus aufweist:
mehrere feste Zahnräder (G2i, G3i, G4i, G5i), die auf der Eingangswelle oder der Ausgangwelle (Ai) oder der Ausgangswelle (Ao) verdrehfest vorgesehen sind und die den mehreren Hybridfahrtgangstufen entsprechen;
mehrere leerlaufende Zahnräder (G2o, G3o, G4o, G5o), die auf der Eingangswelle oder der Ausgangswelle verdrehbar vorgesehen sind, die den mehreren Hybridfahrtgangstufen entsprechen und die mit den festen Zahnrädern der entsprechenden Hybridfahrtgangstufen ständig kämmen;
mehrere Muffen (S1, S2), die verdrehfest und axial beweglich auf der entsprechenden Welle aus der Eingangswelle und der Ausgangswelle vorgesehen sind und die jeweils mit dem entsprechenden leerlaufenden Zahnrad der mehreren leerlaufenden Zahnräder in Eingriff gebracht werden können, um so das entsprechende leerlaufende Zahnrad auf der entsprechenden Welle zu fixieren, sodass das entsprechende Zahnrad sich relativ zur entsprechenden Welle nicht verdrehen kann;
mehrere Gabelstangen (FS1, FS2), die jeweils mit einer Entsprechenden der mehreren Muffen verbunden sind und sich in deren axialer Richtung bewegen können; und
eine Schalt- und Auswahlstange, die als ein Ergebnis der Auswahlbetätigung des Schaltbetätigungselements in deren axialer Richtung bewegt wird oder um ihre Achse gedreht wird und als ein Ergebnis der Schaltbetätigung des Schaltbetätigungselements um ihre Achse gedreht oder in der axialen Richtung bewegt wird, wobei die Schalt- und Auswahlstange einen ersten und einen zweiten inneren Hebel (IL1, IL2) aufweist, die von einer Seitenfläche der Schalt- und Auswahlstange vorstehen, wobei
als ein Ergebnis der Auswahlbetätigung des Schaltbetätigungselements ein entsprechender inneren Hebel aus dem ersten und dem zweiten inneren Hebel (IL1, IL2) sich zu einer Position bewegt, an der der innere Hebel mit einem entsprechenden Schaltkopf (H1, H2) in Eingriff bringbar ist, der an einer Seitenfläche einer entsprechenden Gabelstange unter den mehreren Gabelstangen ausgebildet ist, und als ein Ergebnis der Schaltbetätigung des Schaltbetätigungselements der entsprechende innere Hebel sich bewegt und mit dem entsprechenden Schaltkopf (H1, H2) in Eingriff kommt, wodurch die entsprechende Gabelstange sich axial von der neutralen Position aus bewegt, um dadurch eine entsprechende Gangstufe umzusetzen;
wenn das Schaltbetätigungselement als ein Ergebnis der Auswahlbetätigung an der ersten Auswahlposition angeordnet ist, der erste innere Hebel (IL1) sich zu einer Position bewegt, in der er mit dem Schaltkopf der ersten Gabelstange (FS1) unter den mehreren Gabelstangen in Eingriff bringbar ist; und
wenn das Schaltbetätigungselement als ein Ergebnis der Auswahlbetätigung an der zweiten Auswahlposition angeordnet ist, der zweite innere Hebel (IL2) sich zu einer Position bewegt, in der er mit dem Schaltkopf der ersten Gabelstange (FS1) in Eingriff bringbar ist,
wobei der Getriebegangschaltungsmechanismus so konfiguriert ist,
dass zu der Zeit der Schaltbetätigung des Schaltbetätigungselements von der ersten Auswahlposition zur Schaltabschlussposition der ersten Gangstufe (2.) als ein Ergebnis einer Bewegung des ersten inneren Hebels (IL1) in einer ersten axialen Richtung, der erste innere Hebel und der Schaltkopf der ersten Gabelstange miteinander in Eingriff kommen, wodurch sich die Gabelstange von ihrer neutralen Position aus in der ersten axialen Richtung bewegt, um dadurch die erste Gangstufe umzusetzen, und zu der Zeit der Schaltbetätigung des Schaltbetätigungselements von der ersten Auswahlposition zur Schaltabschlussposition der Elektromotorfahrtgangstufe für Vorwärtsfahrt (EV) die erste Gabelstange an der neutralen Position gehalten wird, selbst wenn sich der erste innere Hebel (IL1) in der zweiten axialen Richtung, der ersten axialen Richtung entgegengesetzt bewegt, und
dass zu der Zeit der Schaltbetätigung des Schaltbetätigungselements von der zweiten Auswahlposition zur Schaltabschlussposition der zweiten Gangstufe (5.) als ein Ergebnis einer Bewegung des zweiten inneren Hebels (IL2) in der zweiten axialen Richtung, der zweite innere Hebel und der Schaltkopf der ersten Gabelstange miteinander in Eingriff kommen, wodurch sich die Gabelstange von ihrer neutralen Position aus in der zweiten axialen Richtung bewegt, um dadurch die zweite Gangstufe umzusetzen, und zu der Zeit der Schaltbetätigung des Schaltbetätigungselements von der zweiten Auswahlposition zur Schaltabschlussposition der Elektromotorfahrtgangstufe für Rückwärtsfahrt (EV-R) die erste Gabelstange an der neutralen Position gehalten wird, selbst wenn sich der zweite innere Hebel (IL2) in der ersten axialen Richtung bewegt.

2. Handschaltgetriebe gemäß Anspruch 1, wobei der Getriebegangschaltungsmechanismus so konfiguriert ist,
dass zu der Zeit der Schaltbetätigung des Schaltbetätigungselements von der ersten Auswahlposition zur Schaltabschlussposition der Elektromotorfahrtgangstufe für Vorwärtsfahrt (EV) ein Oberflächenkontakt zwischen abgeschrägten Flächen hergestellt wird, die auf einem Eingriffsteil des ersten inneren Hebels und einem Eingriffsteil des Schaltkopfs der ersten Gabelstange ausgebildet sind, die relativ zur zweiten axialen Richtung geneigt sind und die sich in der gleichen Richtung erstrecken, und
dass zu der Zeit der Schaltbetätigung des Schaltbetätigungselements von der zweiten Auswahlposition zur Schaltabschlussposition der Elektromotorfahrtgangstufe für Rückwärtsfahrt (EV-R) ein Oberflächenkontakt zwischen abgeschrägten Flächen hergestellt wird, die auf einem Eingriffsteil des zweiten inneren Hebels und einem Eingriffsteil des Schaltkopfs der ersten Gabelstange ausgebildet sind, die relativ zur ersten axialen Richtung geneigt sind und die sich in der gleichen Richtung erstrecken.

3. Handschaltgetriebe gemäß Anspruch 2, wobei der Getriebegangschaltungsmechanismus aufweist:
ein Einschränkungselement (B), das eine Bewegung des ersten inneren Hebels oder zweiten inneren Hebels in einer Richtung senkrecht zur ersten und zur zweiten axialen Richtung in einem Zustand einschränkt, in dem das Schaltbetätigungselement an der Schaltabschlussposition angeordnet ist.

## Revendications

1. Transmission manuelle (M/T) ne possédant aucun convertisseur de couple, qui est appliquée sur un véhicule incluant un moteur à combustion interne (E/G) et un moteur électrique (M/G) en tant que sources de puissance, comprenant :
un arbre d'entrée (Ai) sur lequel une puissance est entrée à partir du moteur à combustion interne ;
un arbre de sortie (Ao) sur lequel une puissance est entrée à partir du moteur électrique et à partir duquel une puissance est sortie sur une roue motrice du véhicule ; et
un mécanisme de changement de vitesse de transmission (M) configuré de telle sorte que, lorsqu'un organe d'opération de commande de boîte de vitesses (SL) actionné par un conducteur se déplace, sur un diagramme de commande de boîte de vitesses, vers chacune des positions d'achèvement de commande de boîte de vitesses de déplacement hybride correspondant à une pluralité d'étages d'engrenage de déplacement hybride (2ème à 5ème) pour se déplacer dans un état où des forces d'entraînement du moteur à combustion interne et du moteur électrique peuvent être utilisées, le mécanisme de changement de vitesse de transmission établisse une transmission de puissance entre l'arbre d'entrée et l'arbre de sortie de telle sorte qu'un rapport de réduction de vitesse de transmission, qui est le rapport de vitesse de rotation de l'arbre d'entrée par rapport à celui de l'arbre de sortie, soit réglé à une valeur correspondant à un étage d'engrenage de déplacement hybride correspondant, et, lorsque l'organe d'opération de commande de boîte de vitesses se déplace, sur le diagramme de commande de boîte de vitesses, vers chacune de positions d'achèvement de commande de boîte de vitesses de déplacement de moteur électrique correspondant à une pluralité d'étages d'engrenage de déplacement de moteur électrique (EV, EV-R) pour se déplacer en utilisant la force d'entraînement du moteur électrique seulement, le mécanisme de changement de vitesse de transmission n'établisse aucune transmission de puissance entre l'arbre d'entrée et l'arbre de sortie,
dans laquelle le mécanisme de changement de vitesse de transmission inclut, en tant que pluralité d'étages d'engrenage de déplacement de moteur électrique, un étage d'engrenage de déplacement de moteur électrique pour déplacement vers l'avant et un étage d'engrenage de déplacement de moteur électrique pour déplacement vers l'arrière,
dans laquelle le diagramme de commande de boîte de vitesses inclut :
une ligne de sélection unique s'étendant dans une direction gauche-droite du véhicule qui est un trajet le long duquel l'organe d'opération de commande de boîte de vitesses se déplace dans la direction gauche-droite du véhicule en conséquence d'une opération de sélection, qui est une opération de l'organe d'opération de commande de boîte de vitesses dans la direction gauche-droite du véhicule, dans un état neutre où aucune transmission de puissance n'est établie entre l'arbre d'entrée et l'arbre de sortie ; et
une pluralité de lignes de commande de boîte de vitesses, dont chacune est un trajet le long duquel l'organe d'opération de commande de boîte de vitesses se déplace dans une direction avant-arrière du véhicule en conséquence d'une opération de commande de boîte de vitesses, qui est une opération de l'organe d'opération de commande de boîte de vitesses dans la direction avant-arrière du véhicule, à partir de l'une correspondante parmi une pluralité de positions de sélection sur la ligne de sélection, chaque ligne de commande de boîte de vitesses s'étendant à partir de la position de sélection correspondante vers un côté ou les deux côtés par rapport à la direction avant-arrière du véhicule, et une position d'achèvement de commande de boîte de vitesses correspondante étant disposée à chaque extrémité de chaque ligne de commande de boîte de vitesses, et
dans laquelle la position de sélection correspondant à l'étage d'engrenage de déplacement de moteur électrique pour le déplacement vers l'avant (EV) est une première position de sélection qui est située sur le côté le plus à gauche du véhicule parmi la pluralité de positions de sélection, et la position d'achèvement de commande de boîte de vitesses de l'étage d'engrenage de déplacement de moteur électrique pour le déplacement vers l'avant est disposée à une extrémité avant d'une première ligne de commande de boîte de vitesses, parmi la pluralité de lignes de commande de boîte de vitesses, qui s'étend à partir de la première position de sélection dans la direction avant-arrière du véhicule ;
la position de sélection correspondant à l'étage d'engrenage de déplacement de moteur électrique pour le déplacement vers l'arrière (EV-R) est une seconde position de sélection qui est située sur le côté le plus à droite du véhicule parmi la pluralité de positions de sélection, et la position d'achèvement de commande de boîte de vitesses de l'étage d'engrenage de déplacement de moteur électrique pour le déplacement vers l'arrière est disposée à une extrémité arrière d'une seconde ligne de commande de boîte de vitesses, parmi la pluralité de lignes de commande de boîte de vitesses, qui s'étend à partir de la seconde position de sélection dans la direction avant-arrière du véhicule ; et
la position de sélection correspondant à un second étage d'engrenage (5ème) parmi la pluralité d'étages d'engrenage de déplacement hybride (2ème à 5ème) est la seconde position de sélection, et la position d'achèvement de commande de boîte de vitesses du second étage d'engrenage est disposée à une extrémité avant de la seconde ligne de commande de boîte de vitesses,
**caractérisée en ce que**
la position de sélection correspondant à un premier étage d'engrenage (2ème) parmi la pluralité d'étages d'engrenage de déplacement hybride (2ème à 5ème) est la première position de sélection, et la position d'achèvement de commande de boîte de vitesses du premier étage d'engrenage est disposée à une extrémité arrière de la première ligne de commande de boîte de vitesses ;
dans laquelle le mécanisme de changement de vitesse de transmission inclut :
une pluralité d'engrenages fixes (G2i, G3i, G4i, G5i) qui sont prévus de façon non rotative sur l'arbre d'entrée (Ai) ou l'arbre de sortie (Ao) et qui correspondent à la pluralité d'étages d'engrenage de déplacement hybride ;
une pluralité d'engrenages de ralenti (G2o, G3o, G4o, G5o) qui sont prévus de façon rotative sur l'arbre d'entrée ou l'arbre de sortie, qui correspondent à la pluralité d'étages d'engrenage de déplacement hybride, et qui sont toujours engrenés avec les engrenages fixes des étages d'engrenage de déplacement hybride correspondants ;
une pluralité de manchons (S1, S2) qui sont prévus de façon non rotative et de façon axialement mobile sur l'arbre correspondant des arbres d'entrée et de sortie et dont chacun peut être mis en prise avec l'engrenage de ralenti correspondant parmi la pluralité d'engrenages de ralenti afin de fixer l'engrenage de ralenti correspondant à l'arbre correspondant de telle sorte que l'engrenage de ralenti correspondant ne puisse pas tourner relativement à l'arbre correspondant ;
une pluralité d'arbres de fourchette (FS1, FS2) dont chacun est raccordé à l'un correspondant parmi la pluralité de manchons et peut se déplacer dans une direction axiale de celui-ci ; et
un arbre de commande de boîte de vitesses et de sélection qui est déplacé dans une direction axiale de celui-ci ou est tourné autour de son axe en conséquence de l'opération de sélection de l'organe d'opération de commande de boîte de vitesses, et est tourné autour de son axe ou est déplacé dans la direction axiale en conséquence de l'opération de commande de boîte de vitesses de l'organe d'opération de commande de boîte de vitesses, l'arbre de commande de boîte de vitesses et de sélection possédant des premier et second leviers intérieurs (IL1, IL2) qui font saillie à partir d'une surface latérale de l'arbre de commande de boîte de vitesses et de sélection, dans laquelle, en conséquence de l'opération de sélection de l'organe d'opération de commande de boîte de vitesses, un levier intérieur correspondant des premier et second leviers intérieurs (IL1, IL2) se déplace vers une position où le levier intérieur peut être mis en prise avec une tête de commande de boîte de vitesses correspondante (H1, H2) formée sur une surface latérale d'un arbre de fourchette correspondant parmi la pluralité d'arbres de fourchette, et, en conséquence de l'opération de commande de boîte de vitesses de l'organe d'opération de commande de boîte de vitesses, le levier intérieur correspondant se déplace et entre en prise avec la tête de commande de boîte de vitesses correspondante (H1, H2), moyennant quoi l'arbre de fourchette correspondant se déplace axialement à partir de la position neutre pour ainsi établir un étage d'engrenage correspondant ;
lorsque l'organe d'opération de commande de boîte de vitesses est situé à la première position de sélection en conséquence de l'opération de sélection, le premier levier intérieur (IL1) se déplace vers une position où il peut être mis en prise avec la tête de commande de boîte de vitesses du premier arbre de fourchette (FS1) parmi la pluralité d'arbres de fourchette ; et
lorsque l'organe d'opération de commande de boîte de vitesses est situé à la seconde position de sélection en conséquence de l'opération de sélection, le second levier intérieur (IL2) se déplace vers une position où il peut être mis en prise avec la tête de commande de boîte de vitesses du premier arbre de fourchette (FS1),
dans laquelle le mécanisme de changement de vitesse de transmission est configuré de telle sorte que, à l'instant de l'opération de commande de boîte de vitesses de l'organe d'opération de commande de boîte de vitesses de la première position de sélection à la position d'achèvement de commande de boîte de vitesses du premier étage d'engrenage (2ème), en conséquence du mouvement du premier levier intérieur (IL1) dans une première direction axiale, le premier levier intérieur et la tête de commande de boîte de vitesses du premier arbre de fourchette entrent en prise, moyennant quoi le premier arbre de fourchette se déplace à partir de sa position neutre dans la première direction axiale pour ainsi établir le premier étage d'engrenage, et, à l'instant de l'opération de commande de boîte de vitesses de l'organe d'opération de commande de boîte de vitesses de la première position de sélection à la position d'achèvement de commande de boîte de vitesses de l'étage d'engrenage de déplacement de moteur électrique pour le déplacement vers l'avant (EV), le premier arbre de fourchette est maintenu à la position neutre même lorsque le premier levier intérieur (IL1) se déplace dans la seconde direction axiale opposée à la première direction axiale, et
de telle sorte que, à l'instant de l'opération de commande de boîte de vitesses de l'organe d'opération de commande de boîte de vitesses de la seconde position de sélection à la position d'achèvement de commande de boîte de vitesses du second étage d'engrenage (5ème), en conséquence du mouvement du second levier intérieur (IL2) dans la seconde direction axiale, le second levier intérieur et la tête de commande de boîte de vitesses du premier arbre de fourchette entrent en prise, moyennant quoi le premier arbre de fourchette se déplace à partir de sa position neutre dans la seconde direction axiale pour ainsi établir le second étage d'engrenage, et, à l'instant de l'opération de commande de boîte de vitesses de l'organe d'opération de commande de boîte de vitesses de la seconde position de sélection à la position d'achèvement de commande de boîte de vitesses de l'étage d'engrenage de déplacement de moteur électrique pour le déplacement vers l'arrière (EV-R), le premier arbre de fourchette soit maintenu à la position neutre même lorsque le second levier intérieur (IL2) se déplace dans la première direction axiale.

2. Transmission manuelle selon la revendication 1, dans laquelle le mécanisme de changement de vitesse de transmission est configuré de telle sorte que, à l'instant de l'opération de commande de boîte de vitesses de l'organe d'opération de commande de boîte de vitesses de la première position de sélection à la position d'achèvement de commande de boîte de vitesses de l'étage d'engrenage de déplacement de moteur électrique pour le déplacement vers l'avant (EV), un contact de surface soit établi entre des surfaces inclinées qui sont formées sur une portion d'entrée en prise du premier levier intérieur et une portion d'entrée en prise de la tête de commande de boîte de vitesses du premier arbre de fourchette, qui sont inclinées à partir de la seconde direction axiale, et qui s'étendent dans la même direction, et de telle sorte que, à l'instant de l'opération de commande de boîte de vitesses de l'organe d'opération de commande de boîte de vitesses de la seconde position de sélection à la position d'achèvement de commande de boîte de vitesses de l'étage d'engrenage de déplacement de moteur électrique pour le déplacement vers l'arrière (EV-R), un contact de surface soit établi entre des surfaces inclinées qui sont formées sur une portion d'entrée en prise du second levier intérieur et une portion d'entrée en prise de la tête de commande de boîte de vitesses du premier arbre de fourchette, qui sont inclinées à partir de la première direction axiale, et qui s'étendent dans la même direction.

3. Transmission manuelle selon la revendication 2, dans laquelle le mécanisme de changement de vitesse de transmission comprend :
un organe de restriction (B) qui restreint le mouvement du premier levier intérieur ou du second levier intérieur dans une direction perpendiculaire aux première et seconde directions axiales dans un état où l'organe d'opération de commande de boîte de vitesses est situé à la position d'achèvement de commande de boîte de vitesses.
